# EUROPEAN PATENT APPLICATION

(11) **EP 2 617 587 A1**
(43) Date of publication of application: **24.07.2013**
(21) Application number: 12170633.7
(22) Date of filing: 01.06.2012
(51) Int. Cl.: B60H 1/32, F25D 3/10, F17C 9/00

(54) **Method for refueling and operating natural gas fueled truck**

(30) Priority: 17.01.2012 US 201213351508
(71) Applicant: Linde Aktiengesellschaft, 80331 München (DE)
(72) Inventor: Lee, Ron C., Bloomsbury, NJ New Jersey 08804 (US); Newman, Michael D., Hillsborough, NJ New Jersey 08844 (US); Shirley, Arthur I., Hillsborough, NJ New Jersey 08844 (US); McCormick, Stephen A., Warrington, PA Pennsylvania 18976 (US); Jovanovic, Stevan, North Plainfield, NJ New Jersey 07060 (US)
(74) Representative: Hofmann, Andreas

(57) **Abstract**

In order to address the concerns of using liquid nitrogen (LIN) as a refrigerant in a vehicle (C) and of using liquefied natural gas (LNG) as the fuel for said vehicle (C), a method for operating said vehicle (C) that provides refrigeration and is powered by an engine burning liquefied natural gas (LNG) is proposed, comprising
- feeding (5) liquefied natural gas (LNG) from a liquefied natural gas storage tank (D) to said engine,
- periodically contacting natural gas from said liquefied natural gas storage tank (D) with liquid nitrogen (LIN) and
- periodically feeding (6) liquid nitrogen (LIN) to said vehicle (C) thereby providing refrigeration.

## Description

### Technical field of the present invention

The present invention relates to methods for the use of both liquefied natural gas and liquid nitrogen in the operation of a vehicle for transporting refrigerated goods, in particular to a method for refueling and operating natural gas fueled trucks.

### Background of the present invention; prior art

Large semitrailers or tractor trailers are used to transport frozen goods, such as food to consolidate fuel and labor costs associated with the transport. Often times this transportation is over long distances such as from a manufacturing plant for prepared meats and foods to restaurants or fast food chains.

Alternatively, this transportation of frozen goods may require a series of stops to unload the frozen cargo which requires the opening and closing of the trailer's doors for considerable periods of time, all over the length of the delivery route. This can ultimately have a deleterious effect on the frozen cargo, particularly as to those items that are last to be unloaded.

Natural gas is seeing increasing use as a fuel alternative to combustion fuels such as gasoline and diesel and avoids certain drawbacks such as production cost and combustion emissions that the other fuels possess.

Natural gas is relatively inexpensive compared to conventional motor vehicle fuels. Natural gas burns cleaner than gasoline or diesel and will rise up in the air and dissipate adding to its safety, thus making it attractive in relation to federal emission and pollution laws.

LNG is stored on vehicles in tanks that must account for it being a cryogenic fluid and having a boiling point below -160°C. Double walled and insulated tanks are the norm but during periods of non-use, heat flows to the LNG which will cause it to vaporize and build pressure in the storage tank.

This problem with boil-off and necessary venting is exacerbated by losses suffered during fueling and onboard storage resulting in economic loss and environmental concerns. These are undesirable conditions due to the potential environmental harms as well as the obvious economic losses.

Bulk liquid nitrogen and liquefied natural gas storage tanks are provided at a fueling facility. During storage and refueling, a portion of the liquid nitrogen at the fueling facility is used to prevent liquefied natural gas from venting. Typically a reliquefaction heat exchanger is employed to inhibit liquefied natural gas venting; however, one of ordinary skill in the art could employ other means to inhibit liquefied natural gas venting.

Onboard the vehicle that supplies refrigeration, there are storage tanks for the liquefied natural gas and the liquid nitrogen. The liquefied natural gas is the fuel for the refrigeration vehicle and the amount stored and used onboard is determined by the fuel requirements of the vehicle's engine. The LNG is a cryogenic fluid having a normal boiling point of about -160°C and is able to provide a significant amount of refrigeration.

The LNG used by the vehicle is first vaporized and warmed through heat exchange in the refrigeration space. The amount of refrigeration that is provided by the LNG relative to the demands of the refrigeration space will depend on the usage pattern of LNG and refrigeration requirements. Typically about fifty percent to hundred percent of the refrigeration can be supplied by LNG with the remainder being provided by liquid nitrogen (LIN).

LNG storage onboard the refrigeration vehicle can also be subject to boil-off and venting, particularly during periods when the vehicle's engine is not operating. Similar to the fueling station, the onboard LIN is available to inhibit the LNG venting through the use of a reliquefaction heat exchanger.

### Disclosure of the present invention: object, solution, advantages

Starting from the disadvantages and shortcomings as described above and taking the prior art as discussed into account, an object of the present invention is to address the concerns of using liquid nitrogen as a refrigerant in a vehicle and of using liquefied natural gas as the fuel for said vehicle.

This object is accomplished by a method comprising the features of claim 1. Advantageous embodiments and expedient improvements of the present invention are disclosed in the dependent claims.

The present invention provides for a method for fueling and operating a vehicle that provides refrigeration to goods requiring such wherein the vehicle is fuelled by liquefied natural gas and uses liquid nitrogen as the primary refrigerant.

In one embodiment there is disclosed a method for operating a vehicle that provides refrigeration and is powered by an engine burning liquefied natural gas comprising feeding liquefied natural gas from a storage tank to the engine; periodically contacting natural gas from the liquefied natural gas storage tank with liquid nitrogen and periodically feeding liquid nitrogen to the vehicle thereby providing refrigeration.

According to an advantageous embodiment of the present invention, said liquid nitrogen is in an on-board storage tank.

According to an expedient embodiment of the present invention, said liquefied natural gas is in an on-board storage tank.

According to a favoured embodiment of the present invention, liquefied natural gas is fed to the on-board storage tank.

According to a preferred embodiment of the present invention, said liquefied natural gas storage tank and said liquid nitrogen storage tank are in thermal communication.

According to an advantageous embodiment of the present invention, said natural gas is fed through a line that contacts said liquid nitrogen.

According to an expedient embodiment of the present invention, said liquid nitrogen provides cooling to said natural gas.

According to a favoured embodiment of the present invention, nitrogen gas is periodically vented from said liquid nitrogen storage tank.

According to a preferred embodiment of the present invention, said nitrogen gas is fed through at least one heat exchanger.

According to an advantageous embodiment of the present invention, said period for contacting natural gas with liquid nitrogen is determined by measuring the temperature of said natural gas.

According to an expedient embodiment of the present invention, said temperature measurement is analyzed by a programmable logic controller.

According to a favoured embodiment of the present invention, said programmable logic controller actuates a valve allowing said natural gas to contact said liquid nitrogen.

According to a preferred embodiment of the present invention, said feeding of said liquefied natural gas to said engine is periodic.

According to an advantageous embodiment of the present invention, said vehicle is a truck.

According to an expedient embodiment of the present invention, said truck is a semitrailer or a tractor trailer.

The liquid nitrogen and liquefied natural gas are both stored in separate on-board storage tanks that are in thermal communication with each. This thermal communication is typically a line that connects the vapor space of the liquefied natural gas storage tank with the liquid space of the liquid nitrogen storage tank.

The liquid nitrogen will provide cooling to the natural gas which will liquefy as such and return as liquefied natural gas to the on-board liquefied natural gas storage tank. A temperature probe will measure the temperature of the natural gas present in the vapor portion of the on-board liquefied natural gas storage tank and send this data to a programmable logic control (PLC).

Based on this data a valve can be manipulated which will allow the warmer natural gas to flow from the liquefied natural gas storage tank to the liquid nitrogen storage tank where it will contact the liquid nitrogen, be cooled and return to the liquefied natural gas storage tank where it can be used as the fuel for the vehicle.

Nitrogen will be periodically vented from the on-board liquid nitrogen storage tank after the liquid nitrogen has provided its refrigerant functionality to the refrigeration container that forms part of the vehicle.

Alternatively, there is provided a method for providing refrigeration to a vehicle powered by a liquefied natural gas engine comprising periodically feeding liquid nitrogen to a storage area of the vehicle and periodically contacting the liquefied nitrogen with natural gas whereby heat from the natural gas is transferred into the liquid nitrogen.

In another embodiment, there is disclosed a method for fueling a vehicle comprising feeding liquefied natural gas to an on-board storage tank; feeding liquid nitrogen to an on-board storage tank, wherein the liquefied natural gas storage tank and the liquid nitrogen storage tank are in thermal communication with each other whereby natural gas from the liquefied natural gas storage tank periodically contact the liquid nitrogen, and periodically feeding the liquid natural gas to an engine of the vehicle.

### Brief description of the drawings

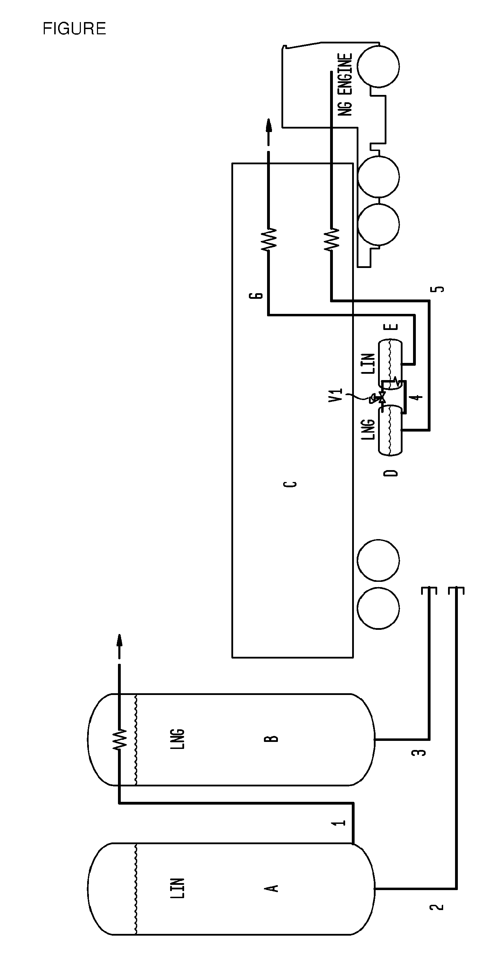

For a more complete understanding of the present inventive embodiment disclosures and as already discussed above, there are several options to embody as well as to improve the teaching of the present invention in an advantageous manner. To this aim, reference may be made to the claims dependent on claim 1; further improvements, features and advantages of the present invention are explained below in more detail with reference to preferred embodiments by way of non-limiting example and to the appended drawing figure taken in conjunction with the description of the embodiments, of which the figure is a schematic showing the fueling of a refrigerated vehicle and the onboard liquefaction system according to the present invention.

### Detailed description of the drawings; best way of embodying the present invention

Basically, the present invention uses a method for operating a vehicle C that provides refrigeration and is powered by an engine for burning liquefied natural gas (LNG). The vehicle C contains on-board storage tanks for liquefied natural gas D and liquid nitrogen E. These two tanks D, E are in thermal communication with each other and natural gas from the liquefied natural gas storage tank D will periodically contact the liquid nitrogen and return as liquefied natural gas.

Turning to the figure, a fueling facility and refrigerant vehicle are shown. Two storage tanks for liquid nitrogen A and for liquefied natural gas B are shown for filling the storage tanks E and D on vehicle C.

A nitrogen vent line 1 exits the bottom of the liquid nitrogen storage tank A and passes through the vapor region of the liquefied natural gas storage tank B where it will cool some of the vaporized natural gas before exiting the liquefied natural gas storage tank B. The cooled natural gas will blend with the liquefied natural gas in the tank and this lessens the problems associated with pressure build up and boil off of the liquefied natural gas.

Line 2 exits the liquid nitrogen storage tank and carries the liquid nitrogen to liquid nitrogen tank E (LIN tank E) onboard the vehicle C. Line 3 exits the liquefied natural gas tank B and connects to the LNG tank D aboard the vehicle C. The amount of each fed to their respective onboard storage tanks is the amount necessary to refuel the vehicle C for its next journey, be it as engine fuel in the case of the liquefied natural gas or as a refrigerant for the liquid nitrogen.

The vehicle C has onboard storage tanks D for LNG and E for LIN mounted in convenient locations for fueling the engine and refrigerating the goods that the vehicle typically carries. In this representation, the vehicle is a semitrailer or tractor trailer for transporting refrigerated goods and employing an engine that can use LNG as a fuel.

Once on-board tanks D and E have been filled from storage tanks B and A, the cooling properties of the liquid nitrogen (LIN) will be employed to keep refrigerated the contents of the vehicle C for example frozen foods, pharmaceuticals or fine chemicals.

While at rest, the LIN from tank E provides cooling to the interior of vehicle C where the items that are being transported and in need of refrigeration are stored. Some of the liquid nitrogen that vaporizes inside tank E is fed through line 6 and a heat exchanger and will vent from the interior of the vehicle C through line 6.

The LNG used to fuel vehicle C is fed from tank D through line 5 to the engine, and this tank will be gradually depleted as the vehicle C travels and its engine consumes the LNG as fuel.

Line 4 thermally connects LNG tank D with LIN tank E. When the vehicle C is at rest for example when some of the cargo is being unloaded, the LNG in tank D is not being steadily withdrawn as a fuel. Some of the LNG will volatilize into natural gas and this can cause a pressure build up in tank D which can present a dangerous situation if this pressure is not relieved.

Typically some form of venting is employed but in the present invention, valve V1 is opened and the natural gas is withdrawn from the header space of LNG tank D through line 4 where it will pass through the LIN in tank E and condense back to LNG where it will return to the liquid portion of the LNG tank D. These same phenomena may occur during operation of the vehicle as well and the same operation will be performed then.

While the present invention has been described with respect to particular embodiments thereof, it is apparent that numerous other forms and modifications of the present invention will be obvious to those skilled in the art. The appended claims in the present invention generally should be construed to cover all such obvious forms and modifications which are within the true spirit and scope of the present invention.

### List of reference numerals

- 1: line, in particular first line, for example nitrogen vent line
- 2: line, in particular second line
- 3: line, in particular third line
- 4: line, in particular fourth line
- 5: line, in particular fifth line
- 6: line, in particular sixth line
- A: liquid nitrogen tank, in particular liquid nitrogen storage tank
- B: liquefied natural gas tank, in particular liquefied natural gas storage tank
- C: vehicle, in particular truck
- D: onboard liquefied natural gas tank, in particular onboard liquefied natural gas storage tank
- E: onboard liquid nitrogen tank, in particular onboard liquid nitrogen storage tank
- LIN: liquid nitrogen
- LNG: liquefied natural gas
- V1: valve

## Claims

1. A method for operating a vehicle (C) that provides refrigeration and is powered by an engine burning liquefied natural gas (LNG) comprising
- feeding (5) liquefied natural gas (LNG) from a liquefied natural gas storage tank (D) to said engine,
- periodically contacting natural gas from said liquefied natural gas storage tank (D) with liquid nitrogen (LIN) and
- periodically feeding (6) liquid nitrogen (LIN) to said vehicle (C) thereby providing refrigeration.

2. The method according to claim 1 wherein said liquid nitrogen (LIN) is in an on-board storage tank (E).

3. The method according to claim 1 or 2 wherein said liquefied natural gas (LNG) is in an on-board storage tank (D).

4. The method according to claim 3 further comprising feeding (3) liquefied natural gas (LNG) to the on-board storage tank (D).

5. The method according to at least one of claims 2 to 4 wherein said liquefied natural gas storage tank (D) and said liquid nitrogen storage tank (E) are in thermal communication.

6. The method according to at least one of claims 1 to 5 wherein said natural gas is fed through a line (4) that contacts said liquid nitrogen (LIN).

7. The method according to at least one of claims 1 to 6 wherein said liquid nitrogen (LIN) provides cooling to said natural gas.

8. The method according to at least one of claims 1 to 7 wherein nitrogen gas is periodically vented from said liquid nitrogen storage tank (E).

9. The method according to claim 8 wherein said nitrogen gas is fed through at least one heat exchanger.

10. The method according to at least one of claims 1 to 9 wherein said period for contacting natural gas with liquid nitrogen (LIN) is determined by measuring the temperature of said natural gas.

11. The method according to claim 10 wherein said temperature measurement is analyzed by a programmable logic controller.

12. The method according to claim 11 wherein said programmable logic controller actuates a valve (V1) allowing said natural gas to contact said liquid nitrogen (LIN).

13. The method according to at least one of claims 1 to 12 wherein said feeding (5) of said liquefied natural gas (LNG) to said engine is periodic.

14. The method according to at least one of claims 1 to 13 wherein said vehicle (C) is a truck.

15. The method according to claim 14 wherein said truck is a semitrailer or a tractor trailer.
